# EUROPÄISCHE PATENTSCHRIFT

(11) **EP 1 781 523 B1**
(45) Veröffentlichungstag und Bekanntmachung des Hinweises auf die Patenterteilung: **31.03.2010**
(21) Anmeldenummer: 05769856.5
(22) Anmeldetag: 11.08.2005
(51) Int. Cl.: B61D 17/02, B61F 19/00

(54) **SCHIENENFAHRZEUG FÜR EINEN FAHRBETRIEB AUF SCHIENENANLAGEN MIT SCHOTTER-OBERBAU**
RAIL VEHICLE FOR DRIVING ON RAIL SYSTEMS HAVING A BALLAST BED SUPERSTRUCTURE
VEHICULE FERROVIAIRE DESTINE A CIRCULER SUR DES INSTALLATIONS DE VOIES A SUPERSTRUCTURE BALLASTEE

(30) Priorität: 24.08.2004 DE 102004041090
(43) Veröffentlichungstag der Anmeldung: 09.05.2007
(73) Patentinhaber: SIEMENS AKTIENGESELLSCHAFT, 80333 München (DE)
(72) Erfinder: SCHROEDER-BODENSTEIN, Kaspar, 40547 Düsseldorf (DE)
(86) Internationale Anmeldenummer: PCT/EP2005/053957
(87) Internationale Veröffentlichungsnummer: WO 2006/021514

(56) Entgegenhaltungen:
- EP-A- 0 050 200
- DE-A1- 2 542 780
- DE-A1- 2 558 664

## Beschreibung

Die Erfindung bezieht sich auf ein Schienenfahrzeug für einen Fahrbetrieb auf Schienenanlagen mit Schotter-Oberbau nach dem Oberbegriff von Patentanspruch 1. Ein solches Schienenfahrzeug ist beispielsweise aus den Druckschriften DE 25 42 780 A1 und EP-A-0 050 200 bekannt, wobei die dort beschriebenen Bleche lediglich aerodynamische Wirkung entfalten sollen.

### Dieses Problem ist nachstehend näher erläutert:

Eine gebräuchliche Möglichkeit der Schwellenbettung ist der Schotter-Oberbau. Beim klassischen Schotter-Oberbau können einzelne Schottersteine durch Einwirkungen vielfältiger Art, wie herunterfallende Eisklumpen, Vibrationen oder Luftströmungen, aus dem Gleisbett heraus- und hochgeschleudert werden. In der Folge werden die Schottersteine vom Unterflurbereich des Fahrzeuges getroffen und in der Regel mit hoher Geschwindigkeit in Fahrtrichtung nach vorne geschleudert. In der weiteren Folge können die Schottersteine wieder im Gleisbett einschlagen. Dabei werden in der Regel mehrere, weitere Steine hochgeschleudert. Es ergibt sich eine selbst aufrecht erhaltende massive Schotterlawine, die zu einer starken Schädigung der im Unterflurbereich des Schienenfahrzeuges angeordneten Systemkomponenten führen kann.

Das Problem des Schotterfluges ist vor allem bei Hochgeschwindigkeitszügen in Deutschland (ICE), Frankreich (TGV), Italien (ETR 500) und Spanien aktuell, die mit Geschwindigkeiten oberhalb von 200 km/h verkehren.

Der Erfindung liegt die Aufgabe zugrunde, ein Schienenfahrzeug auf möglichst einfache Weise derart auszubilden, dass die schädigende Wirkung hochgewirbelter Schottersteine oder anderer Fremdkörper vermieden wird, wobei darüber hinaus die Wahrscheinlichkeit des Auftretens einer Schotterlawine deutlich reduziert werden soll.

Diese Aufgabe wird erfindungsgemäß durch die Merkmale des Anspruchs 1 gelöst, wobei am Ende des Drehgestellfreiraumes angeordnete, einseitig an den Wagenkasten angebundene Deflektor-Elemente zwischen die Räder des angrenzenden Radsatzes hineinragen und mit Aussparungen versehen sind, die freigängige Bewegungen der Räder in Querrichtung zulassen.

Der Gegenstand nach der Erfindung führt vorteilhaft zur Realisierung folgender Erkenntnisse:
Flächige Abschrägungen oder Abschirmungen vor vertikalen Flächen im Unterflurbereich führen dazu, dass das Fahrzeug beim Einschlagen von Steinen deutlich weniger Impuls auf einschlagende Schottersteine überträgt. Schottersteine werden leicht nach unten beziehungsweise relativ zum Fahrzeug nach hinten abgelenkt. Damit schlagen die Steine in der Folge mit sehr viel weniger Impuls im Schotterbett ein, so dass die Menge der hoch geschleuderten Steine reduziert wird. Da die Geschwindigkeit eines Schottersteins überdies nach einem Stoß mit einer abgeschrägten Fläche geringer als die Geschwindigkeit des Fahrzeuges ist, werden Steine nicht mehr mit dem Fahrzeug in Fahrtrichtung bewegt sondern bewegen sich unter dem Zug nach hinten. Diese beiden Wirkungen führen dazu, dass die Selbsterhaltung des Schotterfluges (Schotterlawine) vermieden wird. Die Abschrägungen können als schräge Flächen mit einer gegenüber Stößen widerstandsfähigen Oberfläche etwaigen vertikalen oder nicht genügend abgeschrägten Fahrzeugflächen und Fahrzeugkomponenten vorgelagert werden. Sie können ebenso baulich in die relevanten Flächen und Komponenten des Fahrzeuges integriert werden. Die jeweilige Abschrägung ist dabei in Fahrtrichtung vorzusehen.

Vorteilhafte Ausgestaltungen der Erfindung sind in den Unteransprüchen angegeben.

Im Weiteren wird die Erfindung anhand von Ausführungsbeispielen näher beschrieben, die in der Zeichnung jeweils prinzipartig dargestellt ist. Es zeigen
- Fig. 1: ein zum Stand der Technik gehörendes Schienenfahrzeug im Bereich seines Drehgestelles, in Seitenansicht,
- Fig. 2: eine erste Gestaltungsmöglichkeit eines Schienenfahrzeuges nach der Erfindung, in einer der Fig. 1 ähnlichen Darstellung,
- Fig. 3: eine zweite Gestaltungsmöglichkeit eines Schienenfahrzeuges nach der Erfindung, ebenfalls in einer Seitenansicht,
- Fig. 4: die Draufsicht zu Fig. 3,
- Fig. 5: eine dritte Gestaltungsmöglichkeit eines Schienenfahrzeuges nach der Erfindung, in Seitenansicht,
- Fig. 6: eine vierte Gestaltungsmöglichkeit eines Schienenfahrzeuges nach der Erfindung, in Seitenansicht.

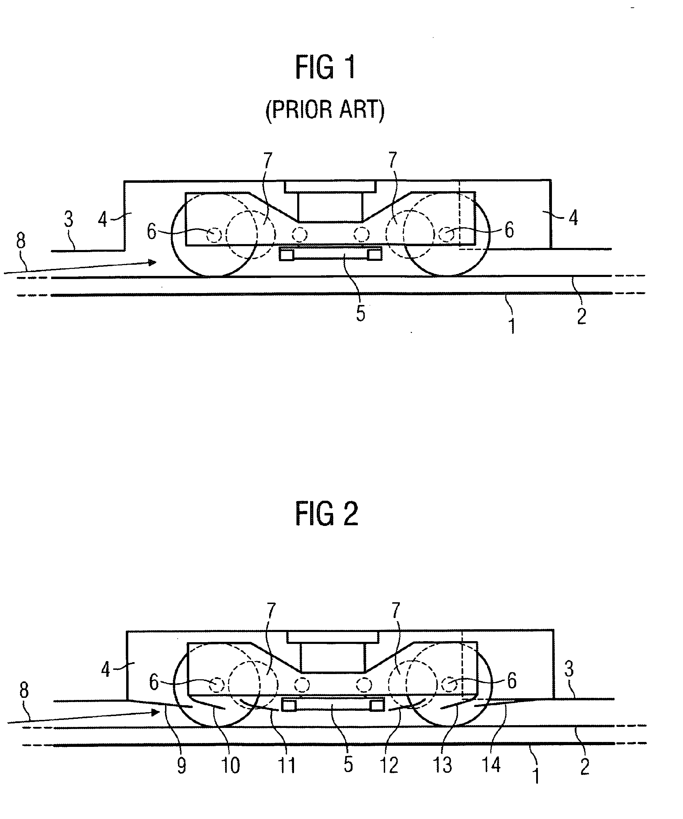

Fig. 1 zeigt den Drehgestellbereich eines Schienenfahrzeuges in herkömmlicher Bauart. Die Linie 1 markiert die Oberkante des Schotters, die Linie 2 markiert die Oberkante der Schienen, Linie 3 stellt die untere Kante des Fahrzeuges beziehungsweise dessen Unterbodenwanne dar. Das Drehgestell befindet sich in einem Drehgestellfreiraum 4 des Wagenkastens. Die zum Drehgestell gehörenden Komponenten Motorträger 5, Radsatzwellen 6 und Fahrmotoren 7 befinden sich im Bereich zwischen den Schienen.

Das Schienenfahrzeug soll sich mit hoher Geschwindigkeit in der Zeichnungsebene von Fig. 1 nach links bewegen. Hochgeschleuderte Schottersteine haben in der Regel eine geringe horizontale Geschwindigkeit. Aus Sicht des Fahrzeuges schlagen sie mit hoher Relativgeschwindigkeit in Längsrichtung oder in leichtem Winkel nach oben ein. Mit dem Pfeil 8 ist eine typische Flugbahn eines Schottersteines bei Fahrt nach links dargestellt. Einschlagende Steine werden insbesondere an den vertikal oder schräg zur Fahrtrichtung ausgerichteten Flächen im Drehgestellbereich in Fahrtrichtung nach vorne reflektiert, in der Abbildung beispielsweise links seitlich am Motorträger 5, seitlich an den Radsatzwellen 6 oder seitlich an den Fahrmotoren 7. Die Reflexion eines Schottersteines führt jeweils zu einer hohen Geschwindigkeit des Steines in Fahrtrichtung nach vorne relativ zum Gleisbett nach dem Stoß. Den Stoßgesetzen folgend haben die Steine nach einem horizontalen Stoß sogar eine höhere Geschwindigkeit als das Fahrzeug. Ein Zusammenstoß mit horizontal zur Fahrtrichtung ausgerichteten Flächen führt dem Schotterstein hingegen keinen Impuls zu. Je stärker die Flächen in Fahrtrichtung zur Horizontalen hin abgeschrägt sind, desto geringer ist die Energiezufuhr.

In Fig. 2 sind verschiedene Ausführungen solcher Abschrägungen dargestellt, die im Folgenden als Deflektor-Elemente bezeichnet werden. Bei angenommener Fahrtrichtung nach links befindet sich ein plattenartiges, ebenes Deflektor-Element 9 vor dem Drehgestell. Es deckt bezüglich der mit dem Pfeil 8 dargestellten Einschlagbahn eines Schottersteines die Laufachse 6 ab, aber auch weitere Elemente im Drehgestell mit vertikalen Kanten. Ein Schotterstein oder Fremdkörper, der gegen das Deflektor-Element 9 prallt, wird nach unten und hinten um den Drehgestellbereich abgelenkt und kann nicht mehr nach vorne angestoßen werden.

Ein weiteres in Fig. 2 gezeigtes platten- oder schalenartiges Deflektor-Element 10 befindet sich vor dem Fahrmotor 7 und der Radsatzwelle 6. Außer der ebenen Ausführung wie bei dem Deflektor-Element 9 kommt auch die dabei dargestellte gekrümmte Form in Betracht. Die Krümmung ist dabei konvex, so dass die untere, exponiertere Zone des Deflektor-Elements 10 flacher und die obere etwas steiler verläuft. Ein Deflektor-Element 11 ist dem Motorträger 5 vorgelagert. Die zu den Deflektor-Elementen 9, 10 und 11 gespiegelten Bauteile 12, 13 und 14 stellen Deflektor-Elemente für die andere Fahrtrichtung des Fahrzeuges nach rechts dar.

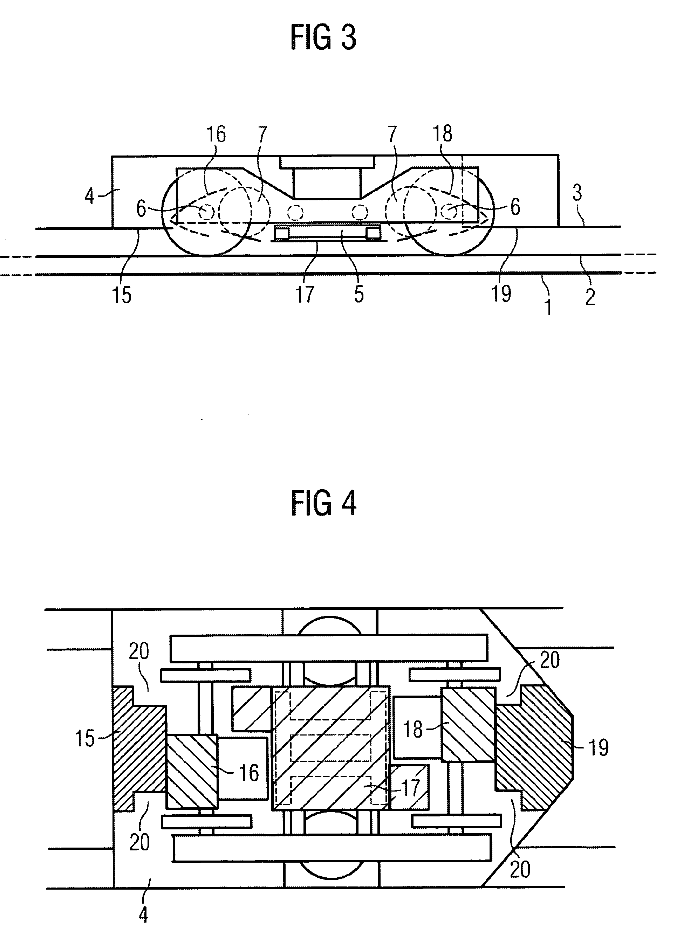

Die Deflektoren können auch horizontal ausgerichtet sein, wie dies bei dem in Fig. 3 und 4 gezeigten Deflektor-Element 15 am vorderen Ende des Drehgestell-Freiraums der Fall ist. Auch ein solches horizontal ausgerichtetes Element 15 hat gegenüber der zahlreichen Menge der schräg von unten einschlagenden Schottersteine eine abschirmende und nach unten ablenkende Wirkung. Das vor dem Drehgestell befindliche Deflektor-Element 15 ist am Wagenkasten angebunden und ragt zwischen die Räder des angrenzenden Radsatzes hinein. Um die Freigängigkeit zu gewährleisten, ist das Deflektor-Element 15 an den Seiten entsprechend den seitlichen Bewegungen der Räder mit Aussparungen 20 versehen. Das außerdem in den Fig. 3 und 4 dargestellte Element 16 veranschaulicht eine mögliche Ausführung eines Deflektors für den Fahrmotor 7. Das Element 16 ist zusätzlich über die Radsatzwelle 6 nach oben gezogen. Damit wird verhindert, dass Schottersteine von oben in den Spalt zwischen Radsatzwelle 6 und Fahrmotor 7 fallen und sich dort verklemmen können. Die Deflektor-Elemente 18 und 19 sind für die entgegen gesetzte Fahrtrichtung vorgesehen und entsprechen den Elementen 16 bzw. 15. Ein weiteres Deflektor-Element 17 ist als große horizontale Schürze unter dem Drehgestell ausgebildet. Durch dieses Element 17 kann verhindert werden, dass Schottersteine im Bereich der Drehgestellmitte von beliebigen unebenen Konturen mit nicht horizontalen Teilflächen angestoßen werden.

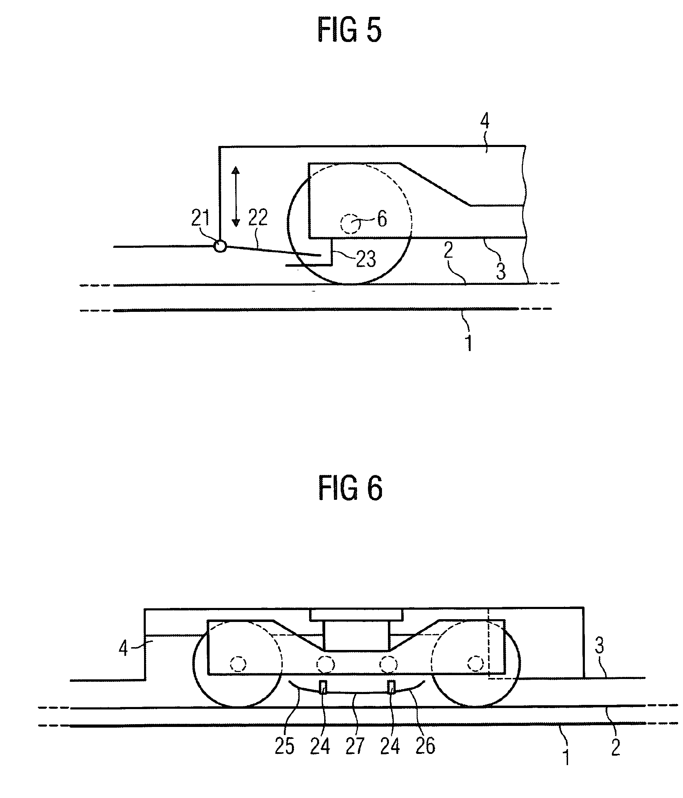

In Fig. 6 ist die Möglichkeit dargestellt, tief liegende Querholme oder Querhalter 24 durch Deflektor-Elemente 25, 26 und 27 abzuschirmen. Die Elemente 25 und 26 sind entweder abgeschrägt oder konvex gekrümmt und jeweils vor den beiden Querhaltern 24 angeordnet. Das plattenartige Element 27 befindet sich zwischen den Querhaltern 24. Die Querhalter 24 dienen beispielsweise der Aufhängung einer Wirbelstrombremse.

Bei einer größeren Abschrägung eines Deflektor-Elementes 22 am Ende des Drehgestellfreiraumes 4 kann sich eine Verletzung der Einschränkungslinie hinsichtlich der Bodenfreiheit des Fahrzeuges ergeben. Eine solche Verletzung wird dadurch vermieden, dass ein Deflektor-Element 22 in einer Achse 21 schwenkbar gelagert wird - siehe Fig. 5. Das durch die Achse 21 gebildete Gelenk kann entweder als Drehgelenk, durch eine federnd biegbare Zone des Deflektor-Elementes 22 oder durch elastische Bänder realisiert sein. Zusätzlich ist am Drehgestell ein Anschlag 23 angebracht. Senkt sich der Wagenkasten des Fahrzeuges über eine bestimmte Tiefe hinaus, so verhindert der Anschlag 23 ein weiteres Absenken des Deflektor-Elementes 22 über diese Tiefe hinaus. An Stelle des Anschlages 23 kann auch ein Antrieb für eine Winkelverstellung des Deflektor-Elementes 22 sorgen, wobei der Antrieb von einer Regelung angesteuert wird, die ein Höhensignal des Fahrzeuges verarbeitet.

Alle hier beschriebenen Deflektor-Elemente können jeweils einstückig ausgebildet sein, jedoch auch aus mehreren Teilen zusammengesetzt werden.

Es ist auch möglich, die beschriebenen entweder abgeschrägten oder konvex gekrümmten Deflektor-Elemente bei Schienenfahrzeugen mit Einachs-Laufwerken oder Einzelrädern einzusetzen. Das verwendete Wort "Drehgestell" gilt mithin auch für solche Einachs-Laufwerke bzw. Einzelrad-Konstruktionen.

## Patentansprüche

1. Schienenfahrzeug für einen Fahrbetrieb auf Schienenanlagen mit Schotter-Oberbau,
wobei,
das Fahrzeug in seinem unteren Bereich Abschirmungen, die durch Deflektor-Elemente gebildet werden, für quer zur Fahrtrichtung verlaufende Flächen am Fahrzeug und an dessen Komponenten aufweist, wobei diese Deflektor-Elemente so gestaltet und angeordnet sind, dass auftreffende Schottersteine entgegen der Fahrtrichtung abgelenkt werden,
**dadurch gekennzeichnet, dass**
am Ende des Drehgestellfreiraumes (4) angeordnete, einseitig an den Wagenkasten angebundene Deflektor-Elemente (9,14,15,19,22) zwischen die Räder des angrenzenden Radsatzes (6) hineinragen und mit Aussparungen (20) versehen sind, die freigängige Bewegungen der Räder in Querrichtung zulassen.

2. Schienenfahrzeug nach Anspruch 1,
**dadurch gekennzeichnet,**
**dass** am Wagenkasten angebrachte Deflektor-Elemente (9, 14; 15, 19; 22) zur Abschirmung eines Drehgestells und von dessen Komponenten angeordnet sind.

3. Schienenfahrzeug nach Anspruch 1 oder 2,
**dadurch gekennzeichnet,**
**dass** am Drehgestell angebrachte Deflektor-Elemente (10, 13; 16, 18) zur Abschirmung von dessen Radsatzwelle (6) und Fahrmotor (7) angeordnet sind.

4. Schienenfahrzeug nach einem der Ansprüche 1 bis 3,
**dadurch gekennzeichnet,**
**dass** am Drehgestell angebrachte Deflektor-Elemente (11, 12; 17) zur Abschirmung von dessen Motorträger (5) angeordnet sind.

5. Schienenfahrzeug nach einem der Ansprüche 1 bis 4,
**dadurch gekennzeichnet,**
**dass** am Drehgestell angebrachte Deflektor-Elemente (25, 26; 27) zur Abschirmung tief liegender Holme oder Querhalter (24) angeordnet sind, die beispielsweise für eine Wirbelstrombremse vorgesehen sind.

6. Schienenfahrzeug nach einem der Ansprüche 1 bis 5,
**dadurch gekennzeichnet,**
**dass** die Deflektor-Elemente (9, 14; 15, 19; 22; 27) als ebene Platten ausgebildet sind.

7. Schienenfahrzeug nach Anspruch 6,
**dadurch gekennzeichnet,**
**dass** die als ebene Platten ausgebildeten Deflektor-Elemente (15, 19; 17; 27) parallel zur Oberkante der Schienen (2) verlaufen.

8. Schienenfahrzeug nach Anspruch 6,
**dadurch gekennzeichnet,**
**dass** die als ebene Platten ausgebildeten Deflektor-Elemente (9, 14; 22) in Fahrtrichtung zur Oberkante der Schienen (2) hin geneigt verlaufen.

9. Schienenfahrzeug nach einem der Ansprüche 1 bis 5,
**dadurch gekennzeichnet,**
**dass** die Deflektor-Elemente (10, 13; 11, 12; 25, 26) schalenartig gekrümmt ausgebildet sind, wobei die Krümmung konvex verläuft.

10. Schienenfahrzeug nach Anspruch 9,
**dadurch gekennzeichnet,**
**dass** die untere, exponiertere Zone der Deflektor-Elemente (10, 13; 11, 12; 25, 26) flacher und deren obere Zone steiler verläuft.

11. Schienenfahrzeug nach einem der Ansprüche 1 bis 10,
**dadurch gekennzeichnet,**
**dass** die Deflektor-Elemente (16, 18) einen über abzuschirmende Fahrzeugflächen oder Fahrzeugkomponenten (6) nach oben gerichteten Abschnitt aufweisen.

12. Schienenfahrzeug nach einem der Ansprüche 1 bis 11,
**dadurch gekennzeichnet,**
**dass** am Ende des Drehgestellfreiraumes (4) angeordnete Deflektor-Elemente (22) durch eine in Querrichtung verlaufende Schwenkachse (21) drehbar mit dem Wagenkasten verbunden sind.

13. Schienenfahrzeug nach Anspruch 12,
**dadurch gekennzeichnet,**
**dass** die drehbaren Deflektor-Elemente (22) durch einen am Drehgestell angebrachten Anschlag (23) in ihrer nach unter gerichteten Schrägstellung begrenzt sind.

14. Schienenfahrzeug nach Anspruch 12,
**dadurch gekennzeichnet,**
**dass** die drehbaren Deflektor-Elemente (22) in ihrer Winkelstellung durch einen Antrieb bewegbar sind, und zwar mittels einer die Höhenstellung des Fahrzeuges erfassenden Mess- und Regeleinrichtung.

15. Schienenfahrzeug nach einem der Ansprüche 12 bis 14,
**dadurch gekennzeichnet,**
**dass** die Schwenkachse (21) durch ein Drehgelenk oder durch eine federnd biegbare Zone des Deflektor-Elementes (22) oder durch elastische Bänder realisiert ist.

16. Schienenfahrzeug nach einem der Ansprüche 1 bis 15,
**dadurch gekennzeichnet,**
**dass** die Deflektor-Elemente in die abzuschirmenden Fahrzeugflächen und Fahrzeugkomponenten unmittelbar integriert sind.

17. Schienenfahrzeug nach einem der Ansprüche 1 bis 16,
**dadurch gekennzeichnet,**
**dass** die Deflektor-Elemente eine gegenüber örtlich einwirkenden Stoßkräften widerstandsfähige Oberfläche aufweisen.

## Claims

1. Rail vehicle for operating on rail systems having a ballast bed superstructure,
wherein
the vehicle has, in its lower area, screens which are formed by deflector elements, for surfaces which extend transversely with respect to the direction of travel on the vehicle and on the components thereof, wherein these deflector elements are configured and arranged in such a way that impacting ballast stones are deflected in the opposite direction to the direction of travel,
**characterized in that**
deflector elements (9, 14; 15, 19; 22) which are arranged at the end of the bogie cavity (4) and are connected at one end to the wagon body, project between the wheels of the adjoining wheel set (6) and are provided with recesses (20) which permit the wheels to move freely in the transverse direction.

2. Rail vehicle according to Claim 1,
**characterized**
**in that** deflector elements (9, 14; 15, 19; 22) which are mounted on the wagon body are arranged so as to screen a bogie and components thereof.

3. Rail vehicle according to Claim 1 or 2,
**characterized**
**in that** deflector elements (10, 13; 16, 18) which are mounted on the bogie are arranged so as to screen the wheel set shaft (6) and the locomotion motor (7) of said bogie.

4. Rail vehicle according to one of Claims 1 to 3,
**characterized**
**in that** deflector elements (11, 12; 17) which are mounted on the bogie are arranged so as to screen the motor carrier (5) of said bogie.

5. Rail vehicle according to one of Claims 1 to 4,
**characterized**
**in that** deflector elements (25, 26; 27) which are mounted on the bogie are arranged so as to screen low-lying beams or transverse supports (24) which are provided, for example, for an eddy current brake.

6. Rail vehicle according to one of Claims 1 to 5,
**characterized**
**in that** the deflector elements (9, 14; 15, 19; 22; 27) are embodied as planar plates.

7. Rail vehicle according to Claim 6,
**characterized**
**in that** the deflector elements (15, 19; 17; 27) which are embodied as planar plates run parallel to the upper edge of the rails (2).

8. Rail vehicle according to Claim 6,
**characterized**
**in that** the deflector elements (9, 14; 22) which are embodied as planar plates run in the direction of travel, inclined towards the upper edge of the rails (2).

9. Rail vehicle according to Claims 1 to 5,
**characterized**
**in that** the deflector elements (10, 13; 11, 12; 25, 26) are embodied curved in a shell-like manner, wherein the curvature is convex.

10. Rail vehicle according to Claim 9,
**characterized**
**in that** the lower, exposed zone of the deflector elements (10, 13; 11, 12; 25, 26) is relatively flat and the upper zone thereof is relatively steep.

11. Rail vehicle according to one of Claims 1 to 10,
**characterized**
**in that** the deflector elements (16, 18) have a section which is directed upwards over vehicle faces or vehicle components (6) which are to be screened.

12. Rail vehicle according to one of Claims 1 to 11,
**characterized**
**in that** deflector elements (22) which are arranged on the end of the bogie cavity (4) are rotatably connected to the wagon body by means of a pivoting axis (21) which runs in the transverse direction.

13. Rail vehicle according to Claim 12,
**characterized**
**in that** the rotatable deflector elements (22) are bounded in their downwardly tilted position by a stop (23) which is provided on the bogie.

14. Rail vehicle according to Claim 12,
**characterized**
**in that** the rotatable deflector elements (22) can be driven in their angular position by a drive, specifically by means of a measuring and control device which senses the vertical position of the vehicle.

15. Rail vehicle according to one of Claims 12 to 14,
**characterized**
**in that** the pivoting axis (21) is implemented by means of a swivel joint or by means of a resiliently pliable zone of the deflector element (22) or by means of elastic belts.

16. Rail vehicle according to one of Claims 1 to 15,
**characterized**
**in that** the deflector elements are directly integrated into the vehicle faces and vehicle components which are to be screened.

17. Rail vehicle according to one of Claims 1 to 16,
**characterized**
**in that** the deflector elements have a surface which is resistant to locally acting impact forces.

## Revendications

1. Véhicule ferroviaire destiné à circuler sur des installations de voies à superstructure ballastée,
dans lequel
le véhicule a dans sa partie inférieure des écrans formés d'éléments de déflecteur pour des surfaces du véhicule et de ses éléments s'étendant transversalement au sens de déplacement, ces éléments de déflecteur étant conformés et disposés de manière à ce que de la pierraille de ballast les percutant soit dévié dans le sens contraire au sens du déplacement,
**caractérisé en ce que** deux éléments ( 9, 14, 15, 19, 22 ) de déflecteur, disposés à l'extrémité de l'espace libre ( 4 ) du châssis et liés d'un côté à la caisse, pénètrent entre les roues de l'essieu ( 6 ) voisin et sont munis d'évidements ( 20 ) qui autorisent la liberté de mouvement des roues dans la direction transversale.

2. Véhicule ferroviaire suivant la revendication 1,
**caractérisé**
**en ce que** des éléments ( 9, 14, 15, 19, 22 ) de déflecteur mis sur la caisse sont disposés pour la protection d'un châssis et de ses éléments.

3. Véhicule ferroviaire suivant la revendication 1 ou 2,
**caractérisé**
**en ce que** des éléments ( 10, 13 ; 16, 18 ) de déflecteur mis sur le châssis sont disposés pour la protection de son arbre ( 6 ) d'essieu et du moteur ( 7 ) de traction.

4. Véhicule ferroviaire suivant l'une des revendications 1 à 3, **caractérisé en ce que** des éléments ( 11, 12 ; 17 ) de déflecteur mis sur le châssis sont disposés pour la protection de son support ( 5 ) de moteur.

5. Véhicule ferroviaire suivant l'une des revendications 1 à 4, **caractérisé en ce que** des éléments ( 25, 26 ; 27 ) de déflecteur mis sur le châssis sont disposés pour la protection de longerons ou de traverses ( 14 ) bas, qui sont prévus par exemple pour un frein à courant de Foucault.

6. Véhicule ferroviaire suivant l'une des revendications 1 à 5, **caractérisé en ce que** les éléments ( 9, 14 ; 15, 19 ; 22 ; 27 ) de déflecteur sont constitués sous la forme de plaques planes.

7. Véhicule ferroviaire suivant la revendication 6, **caractérisé en ce que** les éléments ( 15, 19 ; 17 ; 27 ) de déflecteur constitués sous la forme de plaques planes s'étendent parallèlement au bord supérieur des rails ( 2 ).

8. Véhicule ferroviaire suivant la revendication 6, **caractérisé en ce que** les éléments ( 9, 14 ; 22 ) de déflecteur constitués sous la forme de flaques planes sont inclinés en allant vers le bord supérieur des rails ( 2 ) dans le sens du déplacement.

9. Véhicule ferroviaire suivant l'une des revendications 1 à 5, **caractérisé en ce que** les éléments ( 10, 13 ; 11, 12 ; 25, 26 ) de déflecteur sont constitués en étant courbés en coquille, la courbure étant convexe.

10. Véhicule ferroviaire suivant la revendication 9, **caractérisé en ce que** la zone inférieure exposée des éléments ( 10, 13 ; 11, 12 ; 25, 26 ) de déflecteur est plus plane et sa zone supérieure plus pentue.

11. Véhicule ferroviaire suivant l'une des revendications 1 à 10, **caractérisé en ce que** les éléments ( 16, 18 ) de déflecteur ont une partie dirigée vers le haut sur des surfaces du véhicule ou des éléments ( 6 ) du véhicule à protéger.

12. Véhicule ferroviaire suivant l'une des revendications 1 à 11, **caractérisé en ce que** des éléments ( 22 ) de déflecteur disposés à l'extrémité de l'espace libre ( 4 ) du châssis sont reliés à la caisse de manière à pouvoir tourner par un axe ( 21 ) de pivotement s'étendant dans la direction transversale.

13. Véhicule ferroviaire suivant la revendication 12, **caractérisé en ce que** la position inclinée dirigée vers le bas d'éléments ( 22 ) de déflecteur tournants est limitée par une butée ( 23 ) montée sur le châssis.

14. Véhicule ferroviaire suivant la revendication 12, **caractérisé en ce que** les éléments ( 22 ) de déflecteur tournants peuvent être déplacés dans leur position angulaire par un entraînement et cela au moyen d'un dispositif de mesure et de régulation détectant la position en hauteur du véhicule.

15. Véhicule ferroviaire suivant l'une des revendications 12 à 14, **caractérisé en ce que** l'axe ( 21 ) de pivotement est réalisé par une charnière ou par une zone souple élastiquement de l'élément ( 22 ) de déflecteur ou par des rubans élastiques.

16. Véhicule ferroviaire suivant l'une des revendications 1 à 15, **caractérisé en ce que** les éléments de déflecteur sont intégrés directement dans les surfaces du véhicule à protéger et des éléments du véhicule à protéger.

17. Véhicule ferroviaire suivant l'une des revendications 1 à 16, **caractérisé en ce que** les éléments de déflecteur ont une surface apte à résister à des force de percussion agissant localement.
